# EUROPEAN PATENT SPECIFICATION

(11) **EP 0 189 680 B1**
(45) Date of publication and mention of the grant of the patent: **10.02.1993**
(21) Application number: 85309536.2
(22) Date of filing: 30.12.1985
(51) Int. Cl.: H02M 3/335

(54) **Stabilizing power source apparatus**
Geregelte Stromversorgung
Appareil de stabilisation de source d'alimentation

(30) Priority: 28.12.1984 JP 277717/84; 29.12.1984 JP 280922/84
(43) Date of publication of application: 06.08.1986
(60) Divisional application: 91202705.9
(73) Proprietor: KABUSHIKI KAISHA TOSHIBA, Kawasaki-shi, Kanagawa-ken 210 (JP)
(72) Inventor: Okochi, Sadao c/o Patent Division, Minato-ku Tokyo (JP)
(74) Representative: Freed, Arthur Woolf

(56) References cited:
- US-A- 3 818 306
- US-A- 3 843 919
- US-A- 4 322 817
- RADIO FERNSEHEN ELEKTRONIK, vol. 30, no. 6, 1981, page 403, Berlin, DE; "Gleichspannungswandler mit zwei geregelten Ausgangsspannungen"
- 17TH ANNUAL IEEE POWER ELECTRONICS SPECIALISTS CONFERENCE 1986, pages 367-374, IEEE, New York, US; T. NINOMIYA et al.: "Analysis of the static and dynamic characteristics of push-pull parallel resonant converters"

## Description

The present invention relates to a multiple output type stabilizing power source apparatus for generating stabilized AC and DC voltages.

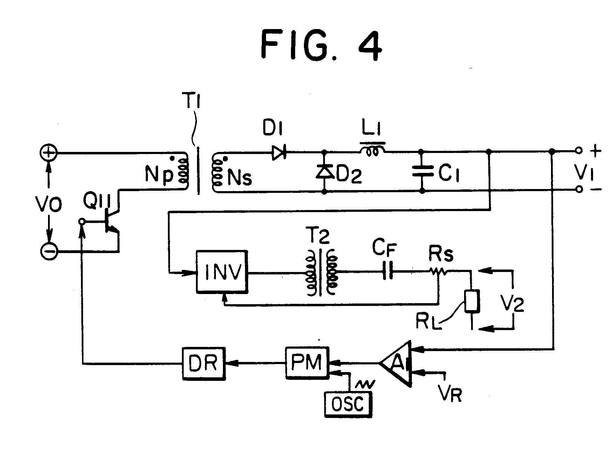

A typical conventional multiple output type stabilizing power source apparatus as shown in Fig. 4 supplies a stabilized DC voltage to a DC load such as electronic equipment and a stabilized AC voltage to an AC load such as a fluorescent lamp.

Referring to Fig. 4, the stabilizing power source apparatus has inverters at the primary and secondary winding sides. A reference symbol V₀ denotes a DC voltage; Q₁, a switching transistor; and T₁, an inverter transformer. The inverter transformer T₁ has a primary winding N_{P} and a secondary winding N_{S}. Reference symbols D₁ and D₂ denote rectifying diodes, respectively; L₁, a choke coil; and C₁, a smoothing capacitor.

A reference symbol A₁ denotes a differential amplifier for comparing a reference voltage V_{R} with a DC output V₁ from the secondary winding N_{S} and generating a signal corresponding to the difference. A reference symbol OSC' denotes an oscillator for generating a triangular wave signal; and PM , a pulse width modulator for converting the triangular wave from the oscillator OSC' to pulses of the same frequency as that of the triangular wave and for changing a pulse width of the converted pulses in accordance with a shift of a crossing point between the triangular wave from the oscillator OSC' and the signal from the differential amplifier A₁. A reference symbol DR denotes a driver for amplifying the pulses from the pulse width modulator PM and for supplying an amplified signal to the base of the transistor Q₁.

A reference symbol INV denotes an inverter for receiving the DC voltage V₁ from the secondary winding N_{S} and for generating an AC voltage upon switching; T₂, a voltage transformer for transforming the AC voltage from the inverter INV; C_{F}, a waveshaping capacitor; and R_{L}, an AC load for receiving an AC output V₂.

It should be noted that a resistor R_{S} detects a current flowing through the AC load R_{L}, and the inverter INV is switched to keep the current constant in response to the detection signal.

In the conventional stabilizing power source apparatus having the structure described above, a rectangular wave current obtained upon switching of the transistor Q₁ is rectified by the diodes D₁ and D₂ connected to the secondary winding N_{S}. The rectified current is smoothed by the choke coil L₁ and the capacitor C₁ to provide the DC output V₁.

The DC output V₁ is supplied to the differential amplifier A₁ and is compared with the reference input voltage V_{R}. The differential amplifier A₁ provides a signal corresponding to the difference to the pulse width modulator PM.

In the pulse width modulator PM , the triangular wave from the oscillator OSC is converted to the pulses of the same frequency as that of the triangular wave. In this case, the pulse width is varied in accordance with the crossing point between the leading ramp of the triangular wave and the output from the differential amplifier A₁. The pulse is amplified by the driver DR, and the amplified pulse is supplied to the base of the transistor Q₁. The duty factor of the transistor Q₁ is thus controlled in response to the output from the differential amplifier A₁. Therefore, the DC voltage V₁ is kept constant.

On the other hand, the stabilized DC output V₁ is supplied to the inverter INV and is converted to the AC voltage upon its switching. The AC voltage is boosted by the transformer T₂. The boosted voltage is then smoothed by the capacitor C_{F}, and the smoothed output is supplied to the AC load R_{L}.

When the AC load R_{L} such as a discharge lamp is driven by the stabilizing power source apparatus described above, an AC voltage which is 3 to 5 times that in normal operation is required to start discharge. Since the capacitor C_{F} is inserted at the output side of the transformer T₂ and the output voltage at the transformer T₂ drops to provide the normal operation voltage for the load R_{L}, no voltage drop occurs across the capacitor C_{F} at the start of discharge when no current flows through the load R_{L}. Thus, a high AC voltage is applied to the load R_{L}.

In the conventional stabilizing power source apparatus, however, since the switching circuits are arranged at the primary and secondary sides of the transformer, the circuit arrangement is complicated.

Furthermore, since the rectangular wave voltage is supplied to the primary winding Nₚ of the inverter transformer T₁, an AC ripple is generated by capacitive couplings between the primary and secondary windings N_{P} and N_{S}. This ripple has the same phase as that of the normal signal component, so that the ripple is fed back to the primary winding N_{P} through the ground line at the secondary winding N_{S}. Therefore, common mode noise including a comparatively high frequency component is generated.

In the conventional apparatus of this type, a large line filter must be inserted at the input side to reduce such noise.

It is also known from Radio Fernsehen Electronik vol 30, No 6, 1981, page 403, to provide a stabilizing power source apparatus having first and second DC output voltages. This stabilizing power source apparatus has a transformer having a primary winding, a direct current being input to the primary winding via a switching device, the transformer having first and second secondary windings. A first rectification/smoothing circuit is connected across the first secondary winding and provides the first DC output voltage and second rectification/smoothing circuit is connected across the second secondary winding and provides the second DC output voltage. A first differential amplifier compares a first reference voltage with the first DC output voltage and generates a first differential signal according to a difference between the first DC output voltage and that first reference signal. A second differential amplifier compares a second reference voltage with the second DC output voltage and generates a second differential signal according to the difference between the second DC output voltage and the second reference voltage. The second differential signal is used to control the frequency of an oscillator, the output of which is supplied to a pulse width modulator. The output width of the pulse is the pulse width modulator is controlled by the first differential signal. The output of the pulse width modulator is applied, via a driver, to the switching device.
It is an object of the present invention to provide a stabilizing power source apparatus with low-level common mode noise.

It is another object of the present invention to provide a stabilizing power source apparatus which has a simple circuit structure and low manufacturing cost.

According to the present invention, there is provided a stabilizing power source apparatus having a DC output voltage and an AC output voltage comprising: a transformer having a primary winding, a direct current being input to said primary winding via a switching device, said transformer having first and second secondary windings, a rectification / smoothing circuit connected across said first secondary winding and providing said DC output voltage, a resonance circuit which connects said second secondary winding to an AC load and outputs said AC output voltage to said AC load, a first differential amplifier for comparing a first reference voltage with said DC output voltage and for generating a first differential signal according to a difference between said DC output voltage and said first reference voltage, a resistor for providing an output voltage representative of the current flowing through said AC load, a second differential amplifier for comparing a second reference voltage with the output voltage of said resistor and for generating a second differential signal according to the difference between said output voltage of said resistor and said second reference voltage, a pulse modulator which is connected to the outputs of the first and second differential amplifiers and which produces a pulse train whose pulse width and frequency are varied in accordance with said first differential signal and said second differential signal, the duty factor of the pulse train being varied to maintain the DC output voltage constant and the frequency of the pulse train being varied to maintain the AC load current constant, and a driver for controlling said switching element in accordance with the output signal of said pulse modulator.

Embodiments of this invention will now be described with reference to the accompanying drawings: -
Fig. 1 is a circuit diagram of a stabilizing power source apparatus according to an embodiment of the present invention;
Fig. 2 is a graph showing the relationship between the switching frequency and the input impedance;
Fig. 3 is a circuit diagram of an oscillator OSC' in the apparatus in Fig. 1; and
Fig. 4 is a circuit diagram of a conventional stabilizing power source apparatus.

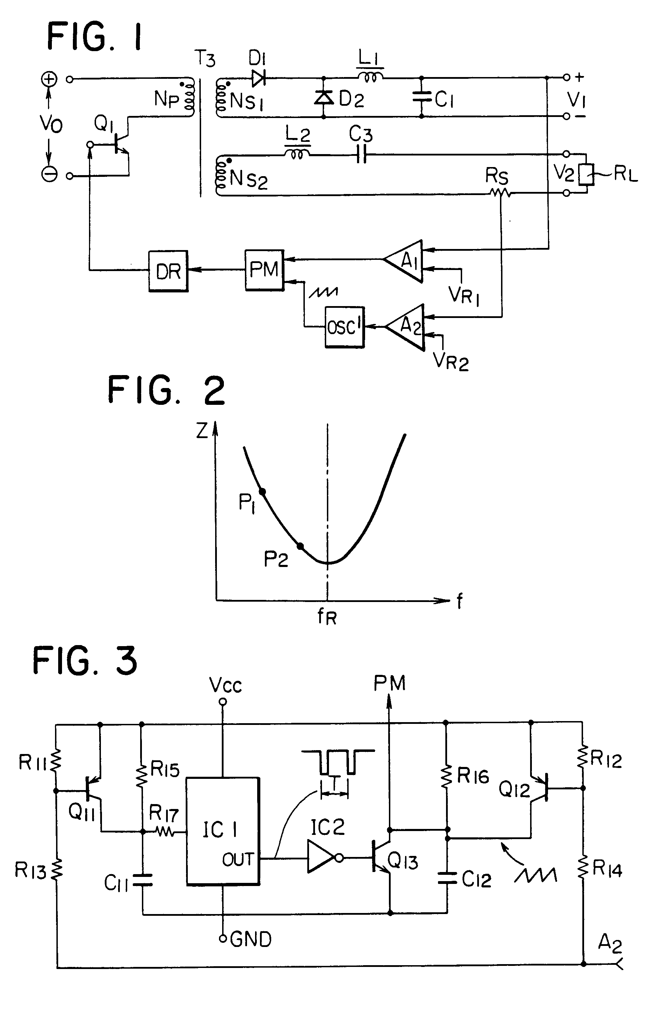

Fig. 1 is a circuit diagram of a stabilizing power source apparatus according to an embodiment of the present invention. The same reference numerals as in Fig. 4 denote the same parts in Fig. 1.

Referring to Fig. 1, a reference symbol V₀ denotes an input DC voltage; Q₁, a switching element; and T₃, an inverter transformer. The inverter transformer T₃ has a primary winding N_{P}, a DC voltage output secondary winding N_{S1} magnetically coupled to the primary winding N_{P}, and an AC output secondary winding N_{S2} magnetically coupled to the primary winding N_{P}. In the above arrangement, the switching element Q₁ comprises a bipolar transistor but can be replaced with a GTO thyristor, a normal thyristor or the like.

Reference symbols D₁ and D₂ denote rectifying diodes for the secondary winding N_{S1}; L₁, a choke coil; C₁, a smoothing capacitor; L₂, a choke coil for the secondary winding N_{S2}; C₃, a filter capacitor; R_{S}, a resistor for detecting a load current; and R_{L}, an AC load.

A reference symbol A₁ denotes a differential amplifier for comparing a reference input voltage V_{R1} with the DC voltage from the secondary winding N_{S1} and generating a signal representing the difference therebetween. A reference symbol A₂ denotes a differential amplifier for receiving the AC voltage from the load current detecting resistor R_{S} inserted between the secondary winding N_{S2} and the load R_{L}, comparing the AC voltage with a reference input voltage V_{R2} and generating a signal representing the difference therebetween. A reference symbol OSC' denotes an oscillator for generating a triangular wave, the leading ramp of which is changed in response to the signal from the differential amplifier A₂. A reference symbol PM denotes a pulse modulator for comparing the output signal from the differential amplifier A₁ with the triangular wave from the oscillator OSC' and generating a pulse, the width and frequency of which are changed in accordance with the shift of the crossing point between these input signals. A reference symbol DR denotes a driver for amplifying the pulse and supplying an amplified signal to the base of the transistor Q₁.

In the stabilizing power source apparatus having the arrangement described above, the duty factor of the transistor Q₁ is controlled to keep the DC output voltage V₁ constant. At the same time, the switching frequency of the transistor Q₁ is controlled to keep the AC load current constant.

The operation of the stabilizing power source apparatus will be described in detail hereinafter.

Fig. 2 is a graph showing the relationship between input impedance Z and frequency f when the AC load R_{L} is viewed from the secondary winding N_{S2}.

When the AC load R_{L} comprises a light load, the switching frequency f of the transistor Q₁ is decreased. Accordingly, the input impedance Z is increased and the load current is decreased (P₁ in Fig. 2).

However, when the AC load R_{L} comprises a heavy load, the switching frequency f of the transistor Q₁ is increased. Accordingly, the input impedance Z is increased, and the load current is also increased (P₂ in Fig. 2).

The input impedance Z is given by:

${\text{Z = jωL₂ + 1/(jωC₃) + R}}_{\text{L}}$

The resonant frequency f_{R} is given by:

${\text{f}}_{\text{R}} \text{= 1/2π·1/√} \overline{\text{R₂C₃}}$

When the load current is increased in the apparatus in Fig. 1, the voltage input to the differential amplifier A₂ is increased, and hence the voltage output from the differential amplifier A₂ is increased. In response to an increase in output voltage, the oscillation frequency of the oscillator OSC' is decreased, but the input impedance Z is increased. As a result, the load current is decreased. Therefore, the current flowing through the load current is always kept constant.

Fig. 3 is a circuit diagram of the oscillator OSC' in the apparatus in Fig. 1.

Referring to Fig. 3, reference symbols R₁₁ to R₁₇ denote resistors; C₁₁ and C₁₂, capacitors; Q₁₁ to Q₁₃, transistors; IC₁, an integrated circuit element as a timer circuit; and IC₂, an integrated circuit element as a NAND gate.

In the oscillator OSC' described above, the timer circuit IC₁ generates a clock signal with a period T at an output terminal OUT thereof so as to charge the capacitor C₁₁ in accordance with a time constant determined by the resistance of the resistor R₁₅ and the capacitance of the capacitor C₁₁, and at the same time, discharge the capacitor C₁₁ in accordance with a time constant determined by the resistance of the resistor R₁₇ and the capacitance of the capacitor C₁₁.

The clock signal is supplied to the base of the transistor Q₁₃ through the NAND gate IC₂, so that the triangular wave voltage appears across the capacitor C₁₂ upon ON/OFF operation of the transistor Q₁₃.

The triangular wave voltage signal is supplied from the collector of the transistor Q₁₃ to the pulse modulator PM.

When the AC voltage V₂ is constant and the signal from the differential amplifier A₂ is the reference voltage value, the transistor Q₁₁ is turned off. The timer circuit IC₁ generates the clock signal of a predetermined frequency. However, when the AC output V₂ is decreased and then the signal voltage from the differential amplifier A₂ is decreased, the internal resistance of the transistor Q₁₁ is decreased and the charge rate of the capacitor C₁₁ is increased. As a result, the period T of the clock signal is shortened.

Upon shortening of the period T, the internal resistance of the transistor Q₁₂ is decreased to increase the charge rate of the capacitor C₁₂. The leading ramp of the triangular wave becomes steep. However, when the AC output V₂ is increased, the leading ramp of the triangular wave becomes moderate in the reverse process.

The frequency of the oscillator OSC' varies in accordance with variations in the output signal from the differential amplifier A₂ which, in turn, varies in accordance with variations in that AC output load current.

In the pulse modulator PM, the width and frequency of the pulse supplied to the base of the switching transistor Q₁ vary in accordance with the variations in the voltage from the differential amplifier A₁ and the frequency of the triangular wave from the oscillator OSC'. The duty factor and the switching frequency of the transistor Q₁ are controlled to keep the DC voltage V₁ and the AC voltage V₂ constant.

In the above embodiment, the inverter at the primary winding comprises a forward type inverter. However, the present invention is not limited to this arrangement. A half-bridge type inverter or a full-bridge type inverter can be used in place of the forward type inverter.

The pulse width and frequency control circuit is exemplified by a PUM consisting of a variable frequency triangular wave oscillator and a comparator in the above description. Alternatively, the output signals from the two amplifiers can be supplied to an astable multivibrator to control the ON time intervals of transistors constituting the astable multivibrator. Therefore, the switching frequency and the ON time intervals can be simultaneously controlled.

According to the present invention, the stabilizing power source apparatus has a single switching circuit, so that the number of components is decreased and the manufacturing cost is decreased. In addition, the apparatus is made small as a whole, and its reliability is improved.

## Claims

1. A stabilizing power source apparatus having a DC output voltage and an AC output voltage comprising:
a transformer (T₃) having a primary winding (N_{P}), a direct current being input to said primary winding (N_{P}) via a switching device (Q₁), said transformer (T₃) having first and second secondary windings (N_{S1}, N_{S2}),
a rectification / smoothing circuit (D₁, D₂, L₁, C₁) connected across said first secondary winding (N_{S1}) and providing said DC output voltage,
a resonance circuit (L₂, C₃) which connects said second secondary winding (N_{S2}) to an AC load and outputs said AC output voltage to said AC load,
a first differential amplifier (A₁) for comparing a first reference voltage with said DC output voltage and for generating a first differential signal according to a difference between said DC output voltage and said first reference voltage,
a resistor (R_{S}) for providing an output voltage representative of the current flowing through said AC load,
a second differential amplifier (A₂) for comparing a second reference voltage with the output voltage of said resistor and for generating a second differential signal according to the difference between said output voltage of said resistor and said second reference voltage,
a pulse modulator (PM) which is connected to the outputs of the first and second differential amplifiers (A₁, A₂) and which produces a pulse train whose pulse width and frequency are varied in accordance with said first differential signal and said second differential signal, the duty factor of the pulse train being varied to maintain the DC output voltage constant and the frequency of the pulse train being varied to maintain the AC load current constant, and
a driver for controlling said switching element (Q₁) in accordance with the output signal of said pulse modulator (PM).

2. A stabilizing power source apparatus according to claim 1, wherein said resonance circuit has a coil (L₂) and a capacitor (C₃) is series.

3. A stabilizing power source apparatus according to claim 1, wherein said resonance circuit has a coil (L₂).

4. A stabilizing power source apparatus according to claim 1, wherein said resonance circuit has a capacitor (C₃).

5. A stabilizing power source apparatus according to claim 1, wherein said AC load is a fluorescent light.

6. A stabilizing power source apparatus according to claim 1, wherein said pulse modulator (PM) comprises an oscillator which generates a triangular wave, whose frequency is changed in response to the output signal from said second differential amplifier (A₂), and which converts the triangular wave to a pulse train of the same frequency as that of the triangular wave and which changes the pulse width of the pulses in accordance with a shift of a crossing point between a leading ramp of the triangular wave and the output signal from said first differential amplifier (A₁).

## Patentansprüche

1. Geregelte Stromversorgung mit einer Ausgangs-Gleichspannung und einer Ausgangs-Wechselspannung, mit:
einem Transformator (T₃), der eine Primärwicklung (N_{P}) aufweist, wobei der Primärwicklung (N_{P}) über eine Schaltvorrichtung (Q₁) ein Gleichstrom eingegeben wird, und der Transformator (T₃) eine erste und eine zweite Sekundärwicklung (N_{S1}, N_{S2}) aufweist,
einer Gleichrichter-Glättungsschaltung (D₁, D₂, L₁, C₁), die über die erste Sekundärwicklung (N_{S1}) geschaltet ist und die Ausgangs-Gleichspannung zur Verfügung stellt,
einer Resonanzschaltung (L₂, C₃), welche die zweite Sekundärwicklung (N_{S2}) mit einer Wechselspannungslast verbindet und die Ausgangswechselspannung an die Wechselspannungslast ausgibt,
einem ersten Differenzverstärker (A₁) zum vergleichen einer ersten Bezugspannung mit der Ausgangsgleichspannung und zur Erzeugung eines ersten Differenzsignals entsprechend einer Differenz zwischen der Ausgangsgleichspannung und der ersten Bezugsspannung,
einem Widerstand (R_{S}), um eine Ausgangsspannung zur Verfügung zu stellen, welche den durch die Wechselspannungslast fließenden Strom repräsentiert,
einem zweiten Differenzverstärker (A₂) zum Vergleichen einer zweiten Bezugsspannung mit der Ausgangsspannung des Widerstands und zur Erzeugung eines zweiten Differenzsignals entsprechend der Differenz zwischen der Ausgangsspannung des Widerstands und der zweiten Bezugsspannung,
einem Impulsmodulator (PM), der an die Ausgänge des ersten und zweiten Differenzverstärkers (A₁, A₂) angeschlossen ist, und der einen Impulszug erzeugt, dessen Impulsbreite und Frequenz entsprechend dem ersten Differenzsignal und dem zweiten Differenzsignal variiert werden, wobei das Tastverhältnis des Impulszuges variiert wird, um die Ausgangsgleichspannung konstant zu halten, und die Frequenz des Impulszuges variiert wird, um den Lastwechselstrom konstant zu halten, und
einem Treiber zum Steuern des Schaltelements (Q₁) entsprechend dem Ausgangssignal des Impulsmodulators (PM).

2. Geregelte Stromversorgung nach Anspruch 1, bei welcher die Resonanzschaltung eine Spule (L₂) und einen Kondensator (C₃) in Reihe aufweist.

3. Geregelte Stromversorgung nach Anspruch 1, bei welcher die Resonanzschaltung eine Spule (L₂) aufweist.

4. Geregelte Stromversorgung nach Anspruch 1, bei welcher die Resonanzschaltung einen Kondensator (C₃) aufweist.

5. Geregelte Stromversorgung nach Anspruch 1, bei welcher die Wechselspannungslast eine Fluoreszenzlampe ist.

6. Geregelte Stromversorgung nach Anspruch 1, bei welcher der Impulsmodulator (PM) einen Oszillator aufweist, der ein Dreiecksignal erzeugt, dessen Frequenz in Reaktion auf das Ausgangssignal des zweiten Differenzverstärkers (A₂) geändert wird, und der das Dreiecksignal in einen Impulszug mit derselben Frequenz wie der des Dreiecksignals umwandelt, und der die Impulsbreite der Impulse entsprechend einer Verschiebung eines Kreuzungspunkts zwischen einer Vorderflanke des Dreiecksignals und dem Ausgangssignal von dem ersten Differenzverstärker (A₁) ändert.

## Revendications

1. Appareil d'alimentation stabilisée présentant une tension de sortie continue et une tension de sortie alternative, comprenant :
un transformateur (T₃) comportant un enroulement primaire (N_{P}), un courant continu étant entré sur ledit enroulement primaire (N_{P}) via un dispositif de commutation (Q₁), ledit transformateur (T₃) comportant des premier et second enroulements secondaires (N_{S1}, N_{S2}) ;
un circuit de redressage/lissage (D₁, D₂, L₁, C₁) connecté aux bornes dudit premier enroulement secondaire (N_{S1}) et produisant ladite tension de sortie continue ;
un circuit de résonance (L₂, C₃) qui connecte ledit second enroulement secondaire (N_{S2}) à une charge alternative et qui émet en sortie ladite tension de sortie alternative pour ladite charge alternative ;
un premier amplificateur différentiel (A₁) pour comparer une première tension de référence à ladite tension de sortie continue et pour générer un premier signal différentiel en fonction d'une différence entre ladite tension de sortie continue et ladite première tension de référence ;
une résistance (R_{S}) pour produire une tension de sortie représentative du courant qui circule au travers de ladite charge alternative ;
un second amplificateur différentiel (A₂) pour comparer une seconde tension de référence à la tension de sortie de ladite résistance et pour générer un second signal différentiel en fonction de la différence entre ladite tension de sortie de ladite résistance et ladite seconde tension de référence ;
un modulateur d' impulsions (PM) qui est connecté aux sorties des premier et second amplificateurs différentiels (A₁, A₂) et qui produit un train d'impulsions dont la largeur d'impulsion et la fréquence varient en fonction dudit premier signal différentiel et dudit second signal différentiel, le coefficient d'utilisation du train d'impulsions étant variable pour maintenir la tension de sortie continue constante et la fréquence du train d'impulsions étant variable pour maintenir le courant de charge alternative constant ; et
un dispositif de commande pour commander ledit élément de commutation (Q₁) en fonction du signal de sortie dudit modulateur d'impulsions (PM).

2. Appareil d'alimentation stabilisée selon la revendication 1, dans lequel ledit circuit de résonance comporte une bobine (L₂) et une capacité (C₃) en série.

3. Appareil d'alimentation stabilisée selon la revendication 1, dans lequel ledit circuit de résonance comporte une bobine (L₂).

4. Appareil d'alimentation stabilisée selon la revendication 1, dans lequel ledit circuit de résonance comporte une capacité (C₃).

5. Appareil d'alimentation stabilisée selon la revendication 1, dans lequel ladite charge alternative est une lumière fluorescente.

6. Appareil d'alimentation stabilisée selon la revendication 1, dans lequel ledit modulateur d'impulsions (PM) comprend un oscillateur qui génère une onde triangulaire dont la fréquence est modifiée en réponse au signal de sortie en provenance dudit second amplificateur différentiel (A₂), qui convertit l'onde triangulaire en un train d'impulsions de la même fréquence que celle de l'onde triangulaire et qui modifie la largeur d'impulsion des impulsions en fonction d'un décalage d'un point de croisement entre une rampe avant de l'onde triangulaire et le signal de sortie en provenance dudit premier amplificateur différentiel (A₁).
